# EUROPEAN PATENT SPECIFICATION

(11) **EP 2 010 008 B1**
(45) Date of publication and mention of the grant of the patent: **22.08.2018**
(21) Application number: 07748055.6
(22) Date of filing: 24.04.2007
(51) Int. Cl.: A23L 7/117, A23L 29/206, A23L 19/12, A23L 19/18, A23L 27/00, A23L 13/40

(54) **FLAVOUR RELEASE MATERIAL AND ITS USE IN DIFFERENT FOOD PRODUCTS**
GESCHMACKSFREISETZUNGSMATERIAL UND SEINE VERWENDUNG FÜR VERSCHIEDENE LEBENSMITTELPRODUKTE
MATÉRIEL DE LIBÉRATION D'UN ARÔME ET SES APPLICATIONS DANS DIVERS PRODUITS ALIMENTAIRES

(30) Priority: 24.04.2006 SE 0600887
(43) Date of publication of application: 07.01.2009
(73) Proprietor: Lyckeby Culinar AB, 290 34 Fjälkinge (SE)
(72) Inventor: LUNDBERG, Jan-Olof, 212 28 Malmö (SE)
(74) Representative: AWA Sweden AB
(86) International application number: PCT/SE2007/000390
(87) International publication number: WO 2007/123466

(56) References cited:
- EP-A1- 0 482 587
- EP-A1- 1 460 123
- EP-A1- 1 609 374
- WO-A1-90/08478
- WO-A1-91/07101
- WO-A2-2005/046609
- US-A- 4 112 125
- US-A- 4 259 355
- US-A- 5 370 881
- US-A1- 2003 091 696
- US-A1- 2003 152 629
- US-B1- 6 436 461
- JINGAN ZHAO ET AL: "SPHERICAL AGGREGATES OF STARCH GRANULES AS FLAVOR CARRIER. ÖDISCOVERY OF A NOVEL PROPERTY OF STARCH GRANULES LEADS TO A METHODFOR CONTROLLED RELEASE OF FLAVOR IN FOOD PRODUCTS", FOOD TECHNOLOGY, INSTITUTE OF FOOD TECHNOLOGISTS, CHICAGO, IL, US, vol. 48, no. 7, 1 July 1994 (1994-07-01), page 104/105, XP000458429, ISSN: 0015-6639

## Description

### Field of the Invention

The present invention relates to a flavour release material, a food product comprising a flavour release material, and use of a flavour release material.

### Technical Background

Aromatic and flavouring agents are added to foodstuff to create a desired flavour profile. However, incorporation of flavourings in, for instance, food products can be problematic since many flavourings are highly volatile. This causes them to easily evaporate from the product, which thereby loses its taste, for instance, during storage and treatment. Furthermore, flavourings can decompose chemically by the handling of the food product when prepared and cooked, e.g. heated, which also results in loss of taste. Alternatively, the flavourings may react with other components included, which also results in loss or change of taste. Due to the above-mentioned factors, it has been difficult to produce food products with a desired flavour profile and/or a long shelf life in terms of added flavour originating from flavourings. One example of how taste can change in connection with storage is wine storage, where taste changes over time. In this case the change is desired, but in most other food applications it is seen as negative when tastes change, deteriorate or disappear.

One method used today is to apply flavourings onto a crystalline raw material, such as salt or sugar, i.e. to adsorb the flavourings to this crystalline raw material. However, when using this method, only a small amount of flavouring can be applied to the crystalline raw material, and it is not possible to add a large amount of flavouring applied to the crystalline raw material, since in that case the crystalline raw material would give too much flavour to the food product. For example, when using salt the food product gets too salty. In addition, flavourings applied to a crystalline raw material have a short life because of relatively rapid oxidation.

Another method is spray-drying, in which the flavourings are applied to a kind of powder matrix. The most frequently used spray-drying media are maltodextrin and arabic gum, but other media are also used. In spray-drying, an emulsion is created, in which water mixed with the spray-drying medium is allowed to evaporate. This method is relatively expensive compared to that of applying flavourings onto a crystalline raw material since it is expensive to evaporate water. Moreover, spray-drying is a method which is carried out at relatively high temperatures, which causes a great deal of flavouring to be lost. As the highly volatile flavourings are present in a water emulsion, there is a great risk that they will disappear from the flavour release material since water evaporates when heated. When adding spray-dried flavours to a food preparation which in most cases contains a large amount of water, the watersoluble matrix dissolves and the added flavour raw materials are likely to evaporate and undergo internal reactions with other raw materials in the food, in particular in connection with heat treatment.

EP1609374 A1 discloses a flavour composition comprising hollow soy cotyledon fibres, the structure of which allows it to carry more flavouring material than can be carried by conventional carrier materials since the flavour ingredient can be plated on both the interior and the exterior surface of the fibre. The flavour ingredient is a liquid and particularly preferred are aqueous, oil, and alcohol based liquid flavours.

US2003/091696 A1 discloses particles which consist of a shell enclosing aromatized vegetable oil, wherein the shell has substantially closed cell porosity which reduces the density of the capsules and which facilitates their dissolution. During preparation of the capsules, droplets are formed, each droplet having a core of gasified aromatized coffee oil surrounded by a substantially spherical wall of the aqueous coffee extract, i.e. the flavouring is surrounded by a shell. The solid wall of the encapsulated product particles is porous and the porosity is substantially all of the closed cell type, with very little channeling and open pore porosity.

EP 0 490 559 A1 discloses a flavour release material suitable for incorporation in tobacco products. This flavour release material involves a core matrix comprising a flavouring and a polysaccharide binder and a coating of alginate film. Also this carrier material presents the disadvantage that the flavour is released to a great extent in heating, since heating makes water evaporate.

### Summary of the Invention

One object of the present invention is to provide a flavour release material, in which the above problems concerning flavour stability of food products are solved in a much more efficient way than in products currently available on the market, in which water evaporates during heating, which causes flavourings to disappear.

This object is achieved according to the invention by a flavour release material which comprises a vegetable fibrous material with natural or artificial cavities and a solution comprising at least one lipophilic flavouring and at least one lipophilic component, the solution being applied to the cavities to provide controlled release of flavouring.

This means that the flavour originating from the flavourings is maintained sensorially in the cavities during heating by means of the lipophilic component, which is for instance an oil or a fat, and furthermore controlled release can be obtained when desired. Since, as already mentioned, water evaporates when heated, highly volatile flavourings thus disappearing, the present invention aims to protect the flavourings in said fibrous material by means of at least one lipophilic component. The present invention thus prevents the flavourings from migrating into the aqueous phase and disappearing with the evaporating water. In connection with the present invention, the notion "controlled release" means that the release occurs when the vegetable fibrous material is exposed to mechanical action, for instance chewing, such that the structure of the fibrous material collapses, due to which the flavourings cease to be protected in the cavities of the fibrous material. When chewing, the fat/water balance changes owing to the addition of saliva, and as the flavourings migrate into the aqueous phase the person consuming the food product gets a better taste perception of said flavourings. Too high temperatures for too long a time, for instance more than 200°C during 5 minutes, may also cause the vegetable fibrous material to collapse. Naturally, the type of release of flavouring taking place when chewing is desired.

As already mentioned, heat treatment is carried out in various types of food processing operations when food products are produced. Since water evaporates during heat treatment, there is also a great risk of loss of flavourings from flavour release materials produced by spray-drying or by application of flavourings onto a crystalline raw material. Since, in these cases, the flavourings are not protected as in the present invention, and since the flavourings are highly volatile components, they are lost in food processing and are not maintained sensorially in connection with the final food product. This is thus a great difference compared to a flavour release material according to the present invention. As the flavourings are kept protected in the fibrous material according to the present invention, they do not disappear as easily when water evaporates.

Another important factor in this context is ageing and migration which may occur during storage. In this case, "migration" means that the flavourings are no longer retained in a matrix of a flavour release material, but are set free and thereby lost. In this context, "ageing" relates to reactions taking place between a flavouring and, for instance, other flavourings or chemical substances in the matrix. One example of ageing is wine storage, in which this effect is desirable. Since in the present invention the flavourings are kept protected, a flavour release material according to the present invention is much more stable, i.e. it has longer storage stability, than a flavour release material in which the flavourings are applied onto a crystalline raw material, since in that case oxidation occurs, or than a flavour release material produced by spray-drying. This is due to the fact that migration and ageing are prevented by the present invention. Moreover, by using a flavour release material according to the present invention, there is no limit to the amount of flavouring that can be added to a food product as is the case when the flavourings are applied to a crystalline raw material.

By providing a food product with a flavour release material according to the present invention, there is a reduced risk of interreactions between other ingredients in the food and the flavourings as such which are protected in the cavities of the vegetable fibrous material during food processing. These interreactions otherwise cause the taste to be different from the added flavour originating from the flavourings, when the food product is consumed. By keeping the flavourings protected, migration is prevented, which limits the risk of flavourings disappearing as water evaporates or of flavourings interacting with other components during food processing.

Another object is to provide food products in which the release of flavouring is rather limited, i.e. said at least one lipophilic flavouring is maintained sensorially in the cavities of the vegetable fibrous material when the food product is heated to a temperature of 195°C for a period which is determined for the specific food product and food processing operation. This is on condition that the food product can be exposed to heat. The selection of flavouring depends on the intended food product and how it is treated during production. Temperature, water content and pressure are examples of processing parameters that are important for the flavourings. For example, when producing flavoured chips according to Example 2 below, the flavourings in the flavour release material have to be maintained sensorially in the vegetable fibrous material at 195°C for at least 45 seconds and then at 180°C for at least 3 minutes, without any loss of added flavour originating from the added flavourings, i.e. the flavour release material remains substantially intact from a sensory point of view. It is therefore of great interest to adapt the composition of the flavour release material as concerns the flavourings and the contents of the components included depending on the food application for which the flavour release material is to be used. It is known that the lower the temperature, the longer the delay of release of an individual flavouring in the flavour release material, in a comparison where all parameters are identical. The temperature is interesting mainly because of the evaporation of water and interreactions.

The object of these food products is achieved by food products comprising a flavour release material according to the invention and use of such a flavour release material in food products, such as chips, crisps, snack products, bread products, biscuits, panadas, meat products, extruded products and spice mixes.

### Definitions

The following terms and expressions are defined in order to facilitate the understanding of the present invention.

### Flavour release material

According to the present invention, "flavour release material" means a flavour system which is composed such that the individual flavour chemicals (flavourings) are released in the matrix of the material under specific conditions, for instance at a given temperature, a given pH value or a given water content, etc. A flavour release material according to the present invention further relates to a system which comprises a vegetable fibrous material with natural or artificial cavities, and a solution comprising at least one lipophilic flavouring and at least one lipophilic component, the solution being applied to the cavities of the fibrous material to provide controlled release of flavouring.

### Controlled release

According to the present invention, "controlled release" means that release of the individual flavour chemicals (the flavourings) takes place at a desired moment, that is to say not to a great extent by chemical interreactions with other ingredients of the solution or by evaporation in heating, for instance, in food processing according to given parameters described herein. Controlled release is achieved according to the present invention when the flavour release material is exposed to mechanical action, e.g. chewing, since this causes a transfer of the flavourings from the fat phase to the aqueous phase (the saliva) in the oral cavity as the vegetable fibrous material decomposes. The opposite of controlled release is, for instance, undesired loss of flavourings in production of flavour release material by spray-drying, in storage of such products or flavour release materials which are produced by flavourings applied to salt, or in heat-treatment of food products comprising such flavour release materials at normal processing temperatures, i.e. from 65°C to 195°C.

### Flavouring

For the present invention, the term "flavouring" relates to that classified as such according to EU standard 88/388/EEC or according to the corresponding regulations and general guidelines relating to flavours, issued by the Swedish Food Administration (SLVFS 1993:34). Section 2 of SLVFS 1993:34 states the definitions of flavour and flavouring.

Thus, according to the present invention, a flavouring is, for instance, a natural or synthetic individual component or mix of chemical compounds, which is pleasant to the taste and/or the smell and which forms or is added, for instance, when producing or cooking the food. Each flavouring has its own special character in terms of smell and taste perception. As examples of flavourings that can be used according to the present invention, mention can be made of, for instance, garlic, onion, pepper, lemon, orange and mint.

One important aspect in this context is that the least one lipophilic component included in the flavour release material according to the present invention can originate from the same raw material source as the at least one lipophilic flavouring also included. An example thereof is oleoresins, such as paprika oleoresin, which is used in the Examples below. Oleoresins comprise flavourings as well as lipophilic components. However, according to the present invention, flavourings can also be mixed with separate lipophilic components, i.e. oils or fats. In the Examples below, paprika olefin is, for instance, mixed with lobra oil (rapeseed oil). According to the present invention, it is thus equally possible to mix flavourings with a fat or an oil which does not originate from the same raw material source as the flavourings, in which case this mixed solution is subsequently mixed with a fibrous material.

### Fibrous material

For the present invention, "fibrous material" preferably refers to a material of soluble and insoluble vegetable fibre.

### Molecular solution

According to the present invention, the notion "molecular solution" relates to a solution in which the individual component, in this case the flavouring, has essentially the same vapour pressure as the solution. According to the present invention, a completely molecular solution is obtained when the individual flavouring component is fat soluble. The notion "molecular solution" should not, however, be considered as a solution in which all the flavourings in the solution with at least one lipophilic component are completely fat soluble since some flavourings can have water soluble parts and still be present in molecular solution.

According to this invention, a molecular solution is a particularly preferred embodiment since the risk of flavourings disappearing as water evaporates is minimised as far as possible.

### Cooking medium

According to the present invention, "cooking medium" means air, water, oil, fat or mixtures thereof used in the actual cooking of the food product. These cooking media are used in food processing to transfer heat to the food product during cooking.

These cooking media can be oils or fats but they are not to be confused with the at least one lipophilic component included in the flavour release material according to the present invention. This does not mean that these oils or fats cannot be the same as the lipophilic components included in the flavour release material.

### Food product

According to the present invention, the expression "food product" also includes food products under preparation. This means that if it is not explicitly stated "final food product" the expression "food product" can refer to a product under production as well as to a final food product.

### Detailed Description of the Invention

Flavourings according to the present invention are typically lipophilic but can also comprise more or less hydrophilic parts. Flavourings are typically highly volatile components with a low molecular weight and high vapour pressure. This also means that flavourings in solution are lost over time and according to the temperature due to evaporation of water. Naturally, this is a problem when heating food products in food processing. Moreover, chemical decomposition of flavourings causes loss of flavourings. This is a problem, for instance, in storage but also in heating.

Since by the present invention the flavourings are protected in the cavities of the fibres by means of lipophilic components, the migration of flavourings into solution is limited. Owing to this, the present invention solves the problem of flavourings being released in heating and storage.

The solution of at least one lipophilic flavouring and at least one lipophilic component is incorporated, after being mixed with the vegetable fibrous material, mainly in the above-mentioned cavities, which ensures that the solution with the including flavourings are kept protected.

Said at least one lipophilic component, which is mixed with flavouring or is in solution with flavouring already from the beginning, can according to the present invention be selected from many different types of oils or fats or consist of a mixture thereof. Which type of oil or fat is selected depends on the type of application for which the flavour release material according to the present invention is intended to be used. Whether the oil or fat is liquid or solid is not very important for the incorporation in the cavities of the vegetable fibrous material.

The present invention is not limited by specific compositions of the contents of fibrous material, flavouring and lipophilic component, but all ratios and concentrations are feasible. However, according to the invention, preferably up to 55% by weight, based on the total weight, of said at least one lipophilic component and said at least one lipophilic flavouring is incorporated in the vegetable fibrous material, the flavour release material being powdery. The powder form of the flavour release material is important so that the flavour release material will, for instance, be sprinkable. The content of said at least one lipophilic component and said at least one lipophilic flavouring which are incorporated in the vegetable fibrous material can be more than 55% by weight, based on the total weight, but in that case the flavour release material will be more like a paste than a powder.

The vegetable fibrous material according to the present invention preferably comprises cellulose and/or hemicellulose. The vegetable fibrous material can also include a certain amount of starch, which it does naturally as an impurity in a cellulose and hemicellulose material. It is, however, more preferred for the fibre to be treated so that the amount of starch is low. This is because starch absorbs flavourings without binding them to the water system, whereas the fibrous material according to the present invention incorporates the flavourings in the solution of at least one lipophilic component. Owing to this, the flavourings are better protected if the starch content is kept low. In a preferred embodiment of the present invention, the maximum starch content of the vegetable fibrous material is 16% by weight, based on the total weight. In case of a higher starch content than 16% by weight, more flavour will be lost in preparation of flavour. These losses should not be connected to the final product in which the ratio of fibre to starch can be completely different. As examples of vegetable fibrous materials mention can be made of, for instance, potato fibre, beet fibre, pea fibre and cellulose fibre.

In a preferred embodiment of the present invention, the vegetable fibrous material has a hollow structure. This hollow structure results in a large contact surface capable of incorporating and binding flavourings. The expression "hollow structure" refers to the kind of structure found in, for instance, potato fibre. Potato fibre is thus a preferred type of the vegetable fibrous material according to the present invention.

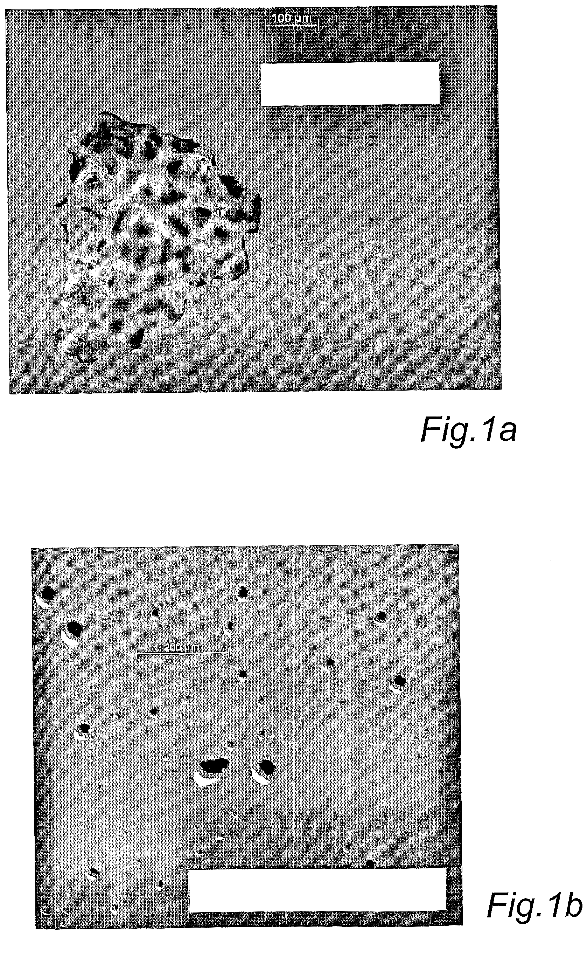

In a particularly preferred embodiment of the present invention, the hollow structure of the vegetable fibrous material is a type of network structure. The network structure maximises the contact surface between the cell wall of the vegetable fibrous material and the lipophilic component, i.e. oil or fat, with flavouring, and thus also the strength of the forces or bindings that cause the solution of at least one lipophilic component and at least one lipophilic flavouring to be retained against the cell walls of the vegetable fibrous material and thus to be maintained sensorially in the cavities of the vegetable fibrous material. Owing to this, a better protection of the flavourings is achieved. One example of this network structure is shown below in Fig. 1A, in a particularly preferred potato fibre, which is a potato fibre from Lyckeby Culinar AB (Kristianstad, Sweden) with product code 15077 or 15078 (April 2006). The production of this potato fibre is disclosed in EP 0 413 681 B1 (Sveriges Stärkelseproducenter, Föreningen UPA, Karlshamn, Sweden) according to the method defined in claim 1 of this document.

The potato fibre with network structure, in this case produced by Lyckeby Culinar AB, is compared with other vegetable fibrous material in Comparative Example 1 below.

A molecular solution according to the present invention makes the vapour pressure decrease as the flavouring mixes with a lipophilic component. This, in turn, causes the release of flavouring to be less fast in heating as water evaporates, since the risk of flavourings migrating into the aqueous phase is reduced. A preferred embodiment of the present invention is thus a flavour release material, in which the solution with at least one lipophilic component and at least one lipophilic flavouring is in the form of a molecular solution.

According to the present invention, cooking medium means air, water, oil, fat or mixtures thereof used in the cooking of the food product, for instance, a deep-frying oil. Examples thereof are vegetable oils, such as rapeseed oil, olive oil, etc., margarine or butter, in liquid as well as solid form.

As the flavour release material, which comprises a vegetable fibrous material with natural or artificial cavities and a solution including at least one lipophilic flavouring and at least one lipophilic component, the solution being applied to the cavities, contacts a cooking medium it is important that the solution does not migrate out of the cavities of the fibre and into said cooking medium. This is once again because highly volatile flavouring substances disappear in evaporation, if they are not kept protected without any contact with the aqueous phase. Thus, a preferred embodiment of the present invention is a flavour release material in which said at least one lipophilic flavouring, applied to the cavities, in the solution is maintained sensorially in the cavities of the vegetable fibrous material as the flavour release material contacts a cooking medium. "Maintained" means, also in this context, that there is no material or significant release of flavouring, in this case into the cooking medium, which affects the added flavour originating from the added flavourings.

The above discussion is, of course, also valid when said cooking medium and flavour release material are heated. For example, when deep-frying chips according to Example 2 below, in which the flavour release material has been added to the chips before deep-frying, the flavouring is maintained in the cavities of the vegetable fibrous material according to the invention, thus not migrating to any significant extent into said cooking medium, which in this case is a deep-frying oil.

In this context, "maintained sensorially in the cavities" means that the flavour release material according to the present invention is able to hold a temperature of up to 195°C in food processing in a cooking medium for a period of time which is determined for the specific food product, which is capable of being exposed to heat without any material loss of flavouring from the flavour release material. "Material loss" of flavouring refers to a loss of flavouring that affects the added flavour, i.e. the initial flavour added by the flavourings, which could be verified by a taste panel. Since individual flavouring components are not identified quantitatively but qualitatively in a group consisting of several such components, the notion "material loss" cannot be quantified but has to be connected to the notion "added flavour".

It is, however, desirable to obtain controlled release of the flavourings when the flavour release material is consumed in different ways in various food products. Therefore a preferred embodiment of the present invention is a flavour release material in which said at least one lipophilic flavouring is released when migrating from the fat phase to the aqueous phase in the oral cavity via the saliva when chewing, i.e. from the oil or fat solution to the saliva. In this regard, the speed of the mechanical action, i.e. the chewing, is also of importance for how fast this migration proceeds.

The flavour release material is intended for food applications. One embodiment of the invention is thus a food product which comprises a flavour release material according to the present invention.

Since the flavourings in the cavities of the vegetable fibrous material are not released to any great extent when exposed to heat at so high temperatures as up to 195°C in food processing, another preferred embodiment of the present invention is a food product comprising the flavour release material according to the invention, which food product is suitable to be exposed to such heat treatment as, for instance, deep-frying, frying, boiling, grilling, baking, extruding, heating in a microwave oven or heating in an oven. Examples of such food products are chips, crisps, snack products, bread products, biscuits, extruded products and meat products. Another embodiment is a spice mix or a panada comprising a flavour release material according to the present invention. The flavour release material according to the present invention can be applied to the outside of a food product or act as an ingredient of the food product.

As almost all food applications are performed at temperatures from 65°C to 195°C, this is also a natural range for heat treatment of food products comprising the flavour release material according to the present invention.

Besides the flavour release material and food products comprising the food release material, the present invention also comprises use of the flavour release material in food products according to that stated above.

### Description of Examples and Drawings

In Figures 1A-5A and 1B-5B, pictures of microscopy experiments are shown in polarised light. In these experiments, various vegetable fibrous materials were mixed with a solution of flavouring (paprika oleoresin) and lipophilic component, in this case oil (lobra oil), to find out how well different types of vegetable fibres incorporate and to some extent absorb, due to their starch content, the solution of flavouring and oil. After the vegetable fibrous material had been mixed with the solution of flavouring and oil so that a powder or paste was obtained, i.e. mixed so well that the solution of flavouring and oil seemed to be incorporated by the fibrous material, this powder or paste was placed between a lower object glass and an upper cover glass. Subsequently, it was investigated how well the specific fibrous material had, in reality, incorporated the solution of flavouring and oil. In A-Figures 1A-5A, pictures are shown from the lower object glass, i.e. where the specific fibrous material appears, and in B-Figures 1B-5B pictures are shown from the upper cover glass. The B-Figures 1B-5B show how much oil, or how many and how large oil drops, there is on the upper cover glass, which as such is a measure of how much of the oil the specific fibrous material has incorporated. The less oil on the cover glass, the better the fibrous material can incorporate the solution of flavouring and oil. If the oil is visible on the cover glass, it is not retained and bound to the fibre matrix. It appears from a comparison of the B-Figures 1B-5B that there is much less oil on the cover glass when using a potato fibre type, in this case a potato fibre from Lyckeby Culinar AB with product code 15077 or 15078 (April 2006), compared to the other fibre types. The production of this potato fibre is disclosed in EP 0 413 681 B1 in claim 1.
Fig. 1A shows the network structure of the potato fibre type from Lyckeby Culinar AB, after being mixed with 20% oil.
Fig. 1B shows the oil drops that appeared on the cover glass in experiments carried out with the potato fibre type from Lyckeby Culinar AB.
Fig. 1C shows the potato fibre type from Lyckey Culinar AB, after mixing 67% of this fibre, 30% oil and 3% paprika oleoresin. Fig. 1C shows even more clearly how well this fibre type incorporates the oil with flavouring. By adding the red colour, it is clearly seen that the oil with flavouring is absorbed straight through the fibre, which means that the network structure of the fibre, with oil and flavouring in the cavities, is maintained without yielding or collapsing.
Fig. 2A shows an individual fibre of the type Vitacel 200 WF (producer J Rettenmailer & Söhne, Food Division, Germany), a cellulose fibre, after being mixed with 20% oil.
Fig. 2B shows the oil drops that appeared on the cover glass in experiments with Vitacel 650 WF (producer J Rettenmailer & Söhne, Food Division, Germany). In this case, there was much more oil on the cover glass than in experiments with potato fibre from Lyckeby Culinar AB.
Fig. 3A shows an individual fibre of bamboo fibre type (Justfibre) (improved by International Fibre Europe N.V., Belgium), after being mixed with 20% oil.
Fig. 4A shows the fibrous material type Fibrex (ground fibre of sugar beet) (producer Danisco, Sweden), after being mixed with 20% oil.
Fig. 4B shows the oil drops that appeared on the cover glass in experiments carried out with Fibrex. In this case, there was much more oil on the cover glass than in experiments with potato fibre from Lyckeby Culinar AB.
Fig. 5A shows the fibrous material type Centutex (pea fibre) (Parrheim Foods, Canada), after being mixed with 20% oil.
Fig. 5B shows the oil drops that appeared on the cover glass in experiments carried out with Centutex. In this case, there was much more oil on the cover glass than in experiments with potato fibre from Lyckeby Culinar AB.

### Examples

The following examples are intended to illustrate the present invention and are not to be considered as limiting the invention.

The flavour release material according to the present invention with vegetable fibrous material, oil or fat and flavouring is not, for instance, limited to any given amount of a particular component, but can be varied depending on the application.

### Comparative Example 1. Potato fibre from Lyckeby Culinar AB as flavour carrier compared to other vegetable fibrous materials

Example 1 should be interpreted in connection with the above-described Figures.

The following fibres were compared: Potato fibre from Lyckey Culinar AB, Vitacel WF 200 and Vitacel WF 650 (cellulose fibre), bamboo fibre, Fibrex (ground fibre of sugar beet) and Centutex (pea fibre).

All the fibres were mixed with 20% oil (80 g fibre + 20 g lobra oil and oleoresin). The mixer which was used was of the type Cyclomix 5L and manufactured by Hosokawa Micron.

### Handleabilitv as powder

All the fibres incorporated and to some extent absorbed, by their starch content, up to 20% oil, but they behaved differently.

Beet fibre and pea fibre behaved rather similarly. They were handleable powders, but the powder adhered to the plastic walls of the storage containers which became oily.

Vitacel WF and bamboo fibre behaved similarly. They incorporated the oil but formed small bundles and did not behave as a powder. The bamboo fibre was more even than Vitacel WF.

Potato fibre from Lyckeby Culinar AB was the fibre which functioned best. It had the same powder behaviour as beet fibre and pea fibre, but less product adhered to the walls of the container, which were not covered by a greasy film.

### Microscopy

### Potato fibre from Lvckebv Culinar AB

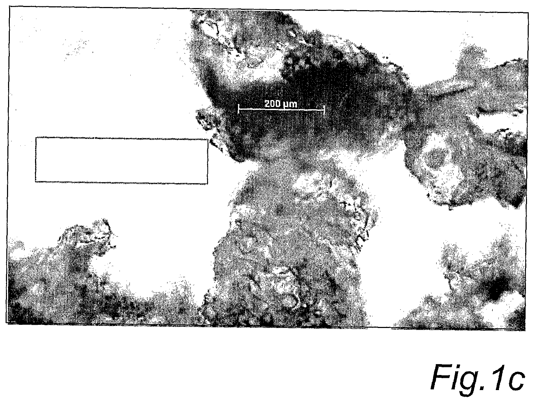

The oil seemed to be evenly distributed and was also present in the cells. A little oil could be seen on the cover glass in microscopy. Potato fibre from Lyckeby Culinar AB maintained its open structure in spite of the fact that some parts were completely covered in oil and seemed, to the naked eye, to be a compact particle (see Fig. 1A). This is better seen when the oil is mixed with 3% paprika oleoresin, which is shown in Fig. 1C.

### Vitacel

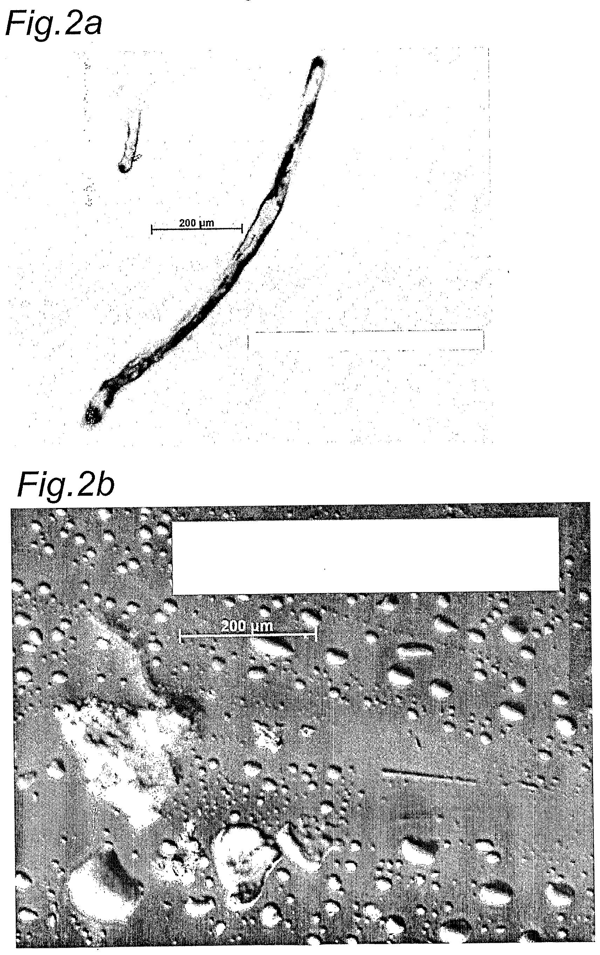

Vitacel WF 200 and WF 650. They differed in terms of fibre length. Microscopy showed a completely different structure than that of potato fibre from Lyckeby Culinar AB. The fibres consisted of thin cellulose fibres. Some oil drops adhered to the cover glass, in particular in the case of WF 650 (see Figs 2A and 2B).

### Bamboo fibre

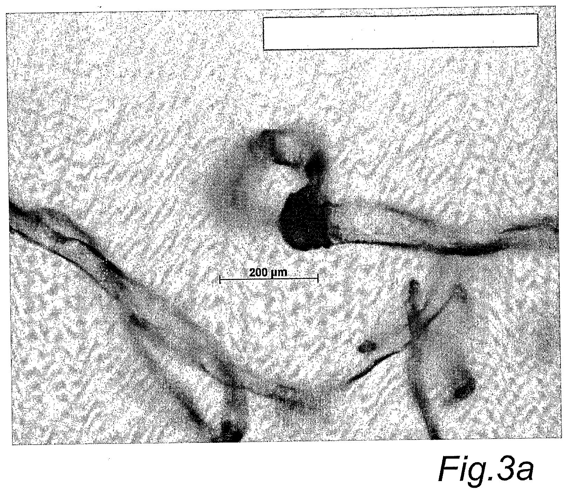

Bamboo fibre (Justfibre) behaved approximately in the same way as Vitacel and also consisted of thin cellulose fibres. A little oil adhered to the cover glass (see Fig. 3A).

### Fibrex

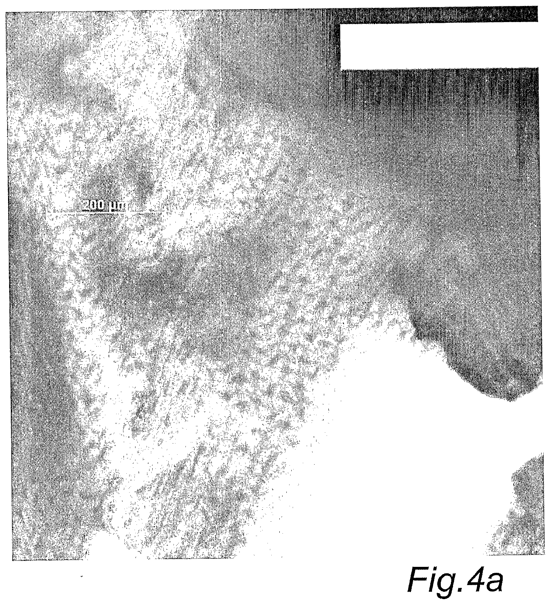

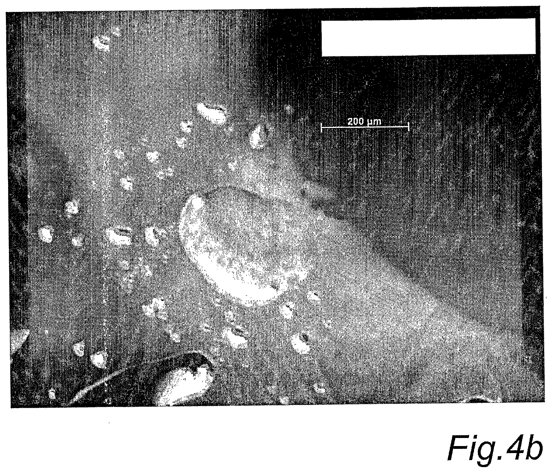

Fibrex (ground beet fibre) consisted of coarse pieces that released oil on the cover glass, which indicated that the oil was mostly on the surface of the fibre (see Figs 4A and 4B).

### Centutex

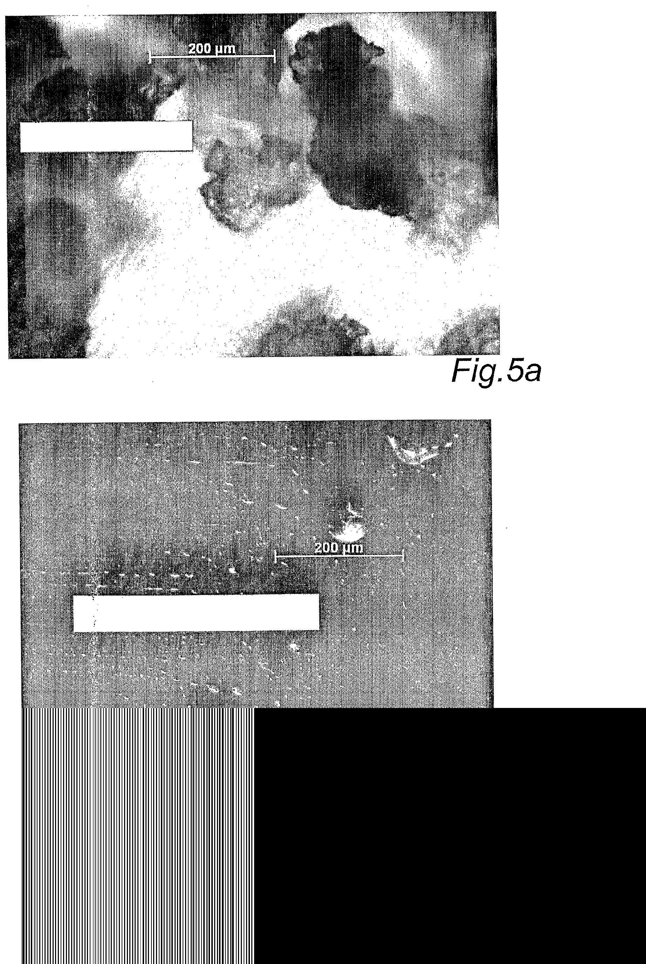

Centutex (pea fibre) also consisted of hard small pieces that had oil on the surface and released oil, which was seen on the cover glass (see Figs 5A and 5B).

### Conclusion

All the different types of vegetable fibrous material are fit for use, but a hollow structure of the fibrous material makes it possible to incorporate and protect more efficiently the solution with at least one oil or fat (lipohilic component) and at least one lipophilic flavouring. In other words, potato fibre is a preferred fibre type and the network structure of the potato fibre from Lyckeby Culinar AB is particularly preferable for the invention.

The above studies of the structure show that potato fibre from Lyckeby Culinar AB has a unique structure which by a particularly efficient system of void cells can incorporate and protect a flavour in a highly efficient manner, thus allowing a delayed release of the same. The above Figures showed that the potato fibre type from Lyckey Culinar AB incorporated oil best, which is indicated by the fact that there was least oil on the upper cover glass when this fibre type was used (see Fig. 1B).

### Example 2. Flavoured chips with flavour release material according to the present invention

Potato which has been treated at a suitable temperature to subsequently be split or cut, and dried, is dipped in a panada mixture comprising a panada with a flavour release material according to the present invention.

The obtained potato pieces dipped in the panada with flavour release material according to the present invention are subsequently deep-fried at 195°C for about 45 seconds and then allowed to cool. After that, they are frozen in pieces.

When the obtained food product, in this case chips, is to be consumed, it is suitably deep-fried for about 3 minutes at 175-180°C. By using the flavour release material according to the present invention, the flavour profile initially intended is preserved when consuming the chips after deep-frying.

The added flavour originating from the added flavourings in the flavour release material was distinctly perceived when eating the chips. An evaluation was also made after two weeks storage in a freezer and also in this case the flavour was still clearly perceptible. In some cases, the consumers of the chips even considered that the flavour was enhanced after storage, rather than being the same. At any rate, the flavour was not reduced.

## Claims

1. A flavour release material, **characterised in that** it comprises a vegetable fibrous material with natural or artificial cavities, and a solution comprising at least one lipophilic flavouring and at least one lipophilic component, the solution being applied to the cavities of the fibrous material to provide controlled release of flavouring, wherein said at least one lipophilic flavouring is maintained in the cavities of the vegetable fibrous material when the food product is heated to a temperature of 195°C for a period which is determined for the specific food product, which is capable of being exposed to heat.

2. A flavour release material as claimed in claim 1, wherein the vegetable fibrous material is a fibrous material which comprises cellulose and/or hemicellulose.

3. A flavour release material as claimed in claim 1 or 2, wherein the vegetable fibrous material has a hollow structure, wherein hollow structure refers to the kind of structure found in potato fibre.

4. A flavour release material as claimed in claim 3, wherein the hollow structure is a network structure.

5. A flavour release material as claimed in any one of claims 1-4, wherein the vegetable fibrous material is a potato fibre.

6. A flavour release material as claimed in any one of claims 1-5, wherein up to 55% by weight, based on the total weight, of said at least one lipophilic flavouring and said at least one lipophilic component is incorporated in the vegetable fibrous material, and wherein the flavour release material is powdery.

7. A flavour release material as claimed in any one of claims 1-6, wherein the vegetable fibrous material has a starch content which is up to 16% by weight, based on the total weight.

8. A flavour release material as claimed in any one of claims 1-7, wherein the solution is in the form of a molecular solution, wherein molecular solution is a solution in which the individual component, in this case the flavouring, has essentially the same vapour pressure as the solution.

9. A flavour release material as claimed in any one of claims 1-8, wherein said at least one lipophilic flavouring in the solution is maintained sensorially in the cavities of the vegetable fibrous material when the flavour release material contacts a cooking medium, without any significant migration to the cooking medium.

10. A flavour release material as claimed in any one of claims 1-9, wherein said at least one lipophilic flavouring is released by migration from the fat phase to the aqueous phase in the oral cavity via the saliva when chewing.

11. A food product comprising a flavour release material as claimed in any one of claims 1-10.

12. A food product as claimed in claim 11, wherein the heat exposure is selected from the group consisting of deep-frying, frying, boiling, grilling, baking, extruding, heating in a microwave oven or heating in an oven.

13. A food product as claimed in any one of claims 11-12, wherein the food product is selected from the group consisting of chips, crisps, snack products, bread products, biscuits, extruded products and meat products.

14. A spice mix or panada comprising a flavour release material as claimed in any one of claims 1-10.

15. Use of a flavour release material as claimed in any one of claims 1-10 together with or in a food product which is adapted to be heat-treated at temperatures of 195°C.

16. Use of a flavour release material as claimed in claim 15 together with or in a food product which is adapted to be heat-treated at temperatures from 65°C to 195°C.

17. Use of a flavour release material as claimed in claim 15 or 16, wherein the food product is selected from the group consisting of chips, crisps, snack products, bread products, biscuits, extruded products and meat products.

18. Use of a flavour release material as claimed in claim 15 or 16 in a spice mix or panada.

19. Use of a flavour release material as claimed in any one of claims 15-18, wherein the food product or the spice mix or the panada is adapted to be heat-treated by deep-frying, frying, baking, extruding, heating in a microwave oven or heating in an oven.

20. A spice mix or panada as claimed in claim 14, wherein a basic spice mix is mixed with the flavour release material.

## Patentansprüche

1. Aromafreisetzungsmaterial, **dadurch gekennzeichnet, dass** es ein Pflanzenfasermaterial mit natürlichen oder künstlichen Hohlräumen und eine Lösung umfasst, die wenigstens einen lipophilen Aromastoff und wenigstens eine lipophile Komponente umfasst, wobei die Lösung in die Hohlräume des Fasermaterials eingebracht ist, um kontrollierte Freisetzung des Aromastoffs bereitzustellen, wobei der wenigstens eine lipophile Aromastoff in den Hohlräumen des Pflanzenfasermaterials gehalten bleibt, wenn das Lebensmittelprodukt für einen Zeitraum, der für das spezifische Lebensmittelprodukt, das zur Exposition gegenüber Hitze geeignet ist, bestimmt wird, auf eine Temperatur von 195 °C erhitzt wird.

2. Aromafreisetzungsmaterial gemäß Anspruch 1, wobei das Pflanzenfasermaterial ein Fasermaterial ist, das Cellulose und/oder Hemicellulose umfasst.

3. Aromafreisetzungsmaterial gemäß Anspruch 1 oder 2, wobei das Pflanzenfasermaterial eine hohle Struktur aufweist, wobei hohle Struktur die Art von Struktur, die in Kartoffelfasern vorkommt, bezeichnet.

4. Aromafreisetzungsmaterial gemäß Anspruch 3, wobei die hohle Struktur eine Netzwerkstruktur ist.

5. Aromafreisetzungsmaterial gemäß einem der Ansprüche 1-4, wobei das Pflanzenfasermaterial eine Kartoffelfaser ist.

6. Aromafreisetzungsmaterial gemäß einem der Ansprüche 1-5, wobei bis zu 55 Gew.-%, bezogen auf das Gesamtgewicht, an dem wenigstens einen lipophilen Aromastoff und der wenigstens einen lipophilen Komponente in das Pflanzenfasermaterial einverleibt sind, wenn das Aromafreisetzungsmaterial pulverförmig ist.

7. Aromafreisetzungsmaterial gemäß einem der Ansprüche 1-6, wobei das Pflanzenfasermaterial einen Stärkegehalt aufweist, der bis zu 16 Gew.-%, bezogen auf das Gesamtgewicht, beträgt.

8. Aromafreisetzungsmaterial gemäß einem der Ansprüche 1-7, wobei die Lösung in der Form einer molekularen Lösung vorliegt, wobei eine molekulare Lösung eine Lösung ist, in der die einzelne Komponente, in diesem Fall der Aromastoff, im Wesentlichen den gleichen Dampfdruck wie die Lösung aufweist.

9. Aromafreisetzungsmaterial gemäß einem der Ansprüche 1-8, wobei der wenigstens eine lipophile Aromastoff in der Lösung sensorisch in den Hohlräumen des Pflanzenfasermaterials gehalten bleibt, wenn das Aromafreisetzungsmaterial mit einem Kochmedium in Kontakt kommt, ohne wesentliche Wanderung in das Kochmedium.

10. Aromafreisetzungsmaterial gemäß einem der Ansprüche 1-9, wobei der wenigstens eine lipophile Aromastoff beim Kauen durch Wanderung aus der Fettphase über die Speichelflüssigkeit in die wässrige Phase in der Mundhöhle freigesetzt wird.

11. Lebensmittelprodukt, umfassend ein Aromafreisetzungsmaterial gemäß einem der Ansprüche 1-10.

12. Lebensmittelprodukt gemäß Anspruch 11, wobei die Wärmeexposition ausgewählt ist aus der Gruppe bestehend aus Frittieren, Braten, Kochen, Grillen, Backen, Extrudieren, Erhitzen in einem Mikrowellenofen und Erhitzen in einem Ofen.

13. Lebensmittelprodukt gemäß einem der Ansprüche 11-12, wobei das Lebensmittelprodukt ausgewählt ist aus der Gruppe bestehend aus Pommes frites, Chips, Snackprodukten, Brotprodukten, Keksen, extrudierten Produkten und Fleischprodukten.

14. Gewürzmischung oder Panade, umfassend ein Aromafreisetzungsmaterial gemäß einem der Ansprüche 1-10.

15. Verwendung eines Aromafreisetzungsmaterials gemäß einem der Ansprüche 1-10 zusammen mit oder in einem Lebensmittelprodukt, das für Wärmebehandlung bei Temperaturen von 195 °C ausgelegt ist.

16. Verwendung eines Aromafreisetzungsmaterials gemäß Anspruch 15 zusammen mit oder in einem Lebensmittelprodukt, das für Wärmebehandlung bei Temperaturen von 65 °C bis 195 °C ausgelegt ist.

17. Verwendung eines Aromafreisetzungsmaterials gemäß Anspruch 15 oder 16, wobei das Lebensmittelprodukt ausgewählt ist aus der Gruppe bestehend aus Pommes frites, Chips, Snackprodukten, Brotprodukten, Keksen, extrudierten Produkten und Fleischprodukten.

18. Verwendung eines Aromafreisetzungsmaterials gemäß Anspruch 15 oder 16 in einer Gewürzmischung oder Panade.

19. Verwendung eines Aromafreisetzungsmaterials gemäß einem der Ansprüche 15-18, wobei das Lebensmittelprodukt oder die Gewürzmischung oder die Panade für die Wärmebehandlung durch Frittieren, Braten, Backen, Extrudieren, Erhitzen in einem Mikrowellenofen und Erhitzen in einem Ofen ausgelegt ist.

20. Gewürzmischung oder Panade gemäß Anspruch 14, wobei eine Gewürz-Grundmischung mit dem Aromafreisetzungsmaterial gemischt ist.

## Revendications

1. Matériau de libération d'arôme, **caractérisé en ce qu'**il comprend un matériau fibreux végétal ayant des cavités naturelles ou artificielles, et une solution comprenant au moins un agent aromatisant lipophile et au moins un composant lipophile, la solution étant appliquée aux cavités du matériau fibreux afin de fournir une libération contrôlée d'agent aromatisant, où ledit au moins un agent aromatisant lipophile est maintenu dans les cavités du matériau fibreux végétal lorsque le produit alimentaire est chauffé à une température de 195°C pendant une période qui est déterminée pour le produit alimentaire spécifique, qui est capable d'être exposé à la chaleur.

2. Matériau de libération d'arôme selon la revendication 1, dans lequel le matériau fibreux végétal est un matériau fibreux qui comprend de la cellulose et/ou de l'hémicellulose.

3. Matériau de libération d'arôme selon la revendication 1 ou 2, dans lequel le matériau fibreux végétal possède une structure creuse, où la structure creuse désigne le type de structure rencontré dans les fibres de pomme de terre.

4. Matériau de libération d'arôme selon la revendication 3, dans lequel la structure creuse est une structure en réseau.

5. Matériau de libération d'arôme selon l'une quelconque des revendications 1-4, dans lequel le matériau fibreux végétal est une fibre de pomme de terre.

6. Matériau de libération d'arôme selon l'une quelconque des revendications 1-5, dans lequel jusqu'à 55% en poids, sur la base du poids total, dudit au moins un agent aromatisant lipophile et dudit au moins un composant lipophile sont incorporés dans le matériau fibreux végétal, et où le matériau de libération d'arôme est pulvérulent.

7. Matériau de libération d'arôme selon l'une quelconque des revendications 1-6, dans lequel le matériau fibreux végétal possède une teneur en amidon qui va jusqu'à 16% en poids, sur la base du poids total.

8. Matériau de libération d'arôme selon l'une quelconque des revendications 1-7, dans lequel la solution se trouve sous la forme d'une solution moléculaire, où la solution moléculaire est une solution dans laquelle le composant individuel, dans ce cas l'agent aromatisant, possède essentiellement la même pression de vapeur que la solution.

9. Matériau de libération d'arôme selon l'une quelconque des revendications 1-8, dans lequel ledit au moins un agent aromatisant lipophile dans la solution est maintenu sur le plan sensoriel dans les cavités du matériau fibreux végétal lorsque le matériau de libération d'arôme entre en contact avec un milieu de cuisson, sans aucune migration significative vers le milieu de cuisson.

10. Matériau de libération d'arôme selon l'une quelconque des revendications 1-9, dans lequel ledit au moins un agent aromatisant lipophile est libéré par migration depuis la phase grasse vers la phase aqueuse dans la cavité orale via la salive lors de la mastication.

11. Produit alimentaire comprenant un matériau de libération d'arôme selon l'une quelconque des revendications 1-10.

12. Produit alimentaire selon la revendication 11, où l'exposition à la chaleur est choisie dans le groupe constitué par la friture à l'huile, la friture, l'ébullition, le rôtissage, la cuisson, l'extrusion, le chauffage dans un four à micro-ondes ou le chauffage dans un four.

13. Produit alimentaire selon l'une quelconque des revendications 11-12, où le produit alimentaire est choisi dans le groupe constitué par les frites, les chips, les produits d'en-cas, les produits de panification, les biscuits, les produits extrudés et les produits carnés.

14. Mélange d'épices ou panada, comprenant un matériau de libération d'arôme selon l'une quelconque des revendications 1-10.

15. Utilisation d'un matériau de libération d'arôme selon l'une quelconque des revendications 1-10, conjointement avec ou dans un produit alimentaire qui est adapté pour être traité thermiquement à des températures de 195°C.

16. Utilisation d'un matériau de libération d'arôme selon la revendication 15, conjointement avec ou dans un produit alimentaire qui est adapté pour être traité thermiquement à des températures allant de 65°C à 195°C.

17. Utilisation d'un matériau de libération d'arôme selon la revendication 15 ou 16, où le produit alimentaire est choisi dans le groupe constitué par les frites, les chips, les produits d'en-cas, les produits de panification, les biscuits, les produits extrudés et les produits carnés.

18. Utilisation d'un matériau de libération d'arôme selon la revendication 15 ou 16, dans un mélange d'épices ou une panada.

19. Utilisation d'un matériau de libération d'arôme selon l'une quelconque des revendications 15-18, où le produit alimentaire ou le mélange d'épices ou la panada est adapté(e) pour être traité(e) thermiquement par friture à l'huile, friture, cuisson, extrusion, chauffage dans un four à micro-ondes ou chauffage dans un four.

20. Mélange d'épices ou panada selon la revendication 14, où un mélange d'épices basique est mélangé avec le matériau de libération d'arôme.
